# EUROPÄISCHE PATENTANMELDUNG

(11) **EP 1 710 207 A1**
(43) Veröffentlichungstag der Anmeldung: **11.10.2006**
(21) Anmeldenummer: 06012147.2
(22) Anmeldetag: 17.01.2003
(51) Int. Cl.: C01B 33/033

(54) **Verfahren zur Herstellung von amorphem Silicium**

(30) Priorität: 18.01.2002 DE 10201772; 17.04.2002 DE 10217125; 17.04.2002 DE 10217140; 17.04.2002 DE 10217124; 17.04.2002 DE 10217126
(62) Teilanmeldung aus: 03704218.1
(71) Anmelder: Wacker Chemie AG, 81737 München (DE)
(72) Erfinder: Auner, Norbert, Prof. Dr., 61479 Glashütten/Taunus (DE)
(74) Vertreter: Döring, Wolfgang

(57) **Zusammenfassung**

Es wird ein Verfahren zur Herstellung von amorphem Silicium beschrieben. Bei einer Verfahrensvariante wird ein Halosilan mit einem Metall in einem apolaren Lösungsmittel umgesetzt. Bei einer zweiten Verfahrensvariante wird amorphes Silicium hergestellt, indem Siliciumtetrachlorid mit einem Metall in einem apolaren Lösungsmittel reduziert wird. Bei einer dritten Variante wird amorphes Silicium durch Umsetzung von SiF₄ mit einem Metall erzeugt. Das Verfahren lässt sich mit einem besonders geringen Aufwand an Materialien und/oder Energie durchführen und/oder zeichnet sich durch eine besonders hohe Vielseitigkeit aus.

## Beschreibung

Die vorliegende Erfindung betrifft ein Verfahren zur Herstellung von amorphem Silicium.

Der Erfindung liegt die Aufgabe zugrunde, ein Verfahren der angegebenen Art zu schaffen, das sich mit einem besonders geringen Aufwand an Materialien und/oder Energie durchführen läßt und/oder sich durch eine besonders hohe Vielseitigkeit auszeichnet.

Gemäß einer ersten Variante des erfindungsgemäßen Verfahrens bezieht sich die Erfindung auf ein Verfahren zur Herstellung von amorphem Silicium durch Reduktion eines Halosilanes mit einem Metall in einem Lösungsmittel.

Ein derartiges Verfahren ist bekannt. So wird beispielsweise in der WO 0114250 ein Verfahren zur Herstellung von Siliciumnanopartikeln beschrieben, bei dem in einem ersten Schritt ein Halosilan mit einem Metall in einem Lösungsmittel reduziert wird, um ein erstes Reaktionsgemisch zu bilden, das ein Metallhalogenid, amorphes Silicium und halogenierte Siliciumnanopartikel enthält. Da das amorphe Silicium bei diesem Verfahren als Nebenprodukt anfällt, werden Einzelheiten hiervon nicht beschrieben. Vielmehr geht es in drei weiteren Verfahrensschritten um die Aufarbeitung dieses ersten Reaktionsgemisches zur Gewinnung der Siliciumnanopartikel.

Als Lösungsmittel werden verschiedene Arten von Glycolethern vorgeschlagen, möglicherweise im Gemisch mit einem apolaren Lösungsmittel.

Als amorph werden Festkörper bezeichnet, deren molekulare Bausteine nicht in Kristallgittern, sondern regellos angeordnet sind. Amorphes Silicium (a-Si) läßt sich wesentlich kostengünstiger herstellen als kristallines Silicium und stellt daher ein Material dar, nach dem ein großer Bedarf besteht.

Die vorstehend genannte Aufgabe wird erfindungsgemäß bei einem Verfahren der angegebenen Art durch die kennzeichnenden Merkmale von Patentanspruch 1 gelöst.

Mit dem erfindungsgemäßen Verfahren läßt sich amorphes Silicium gewinnen, das im Vergleich zu auf herkömmliche Weise hergestelltem amorphen Silicium eine gesteigerte Reaktivität aufweist.

Mit dem hier verwendeten Begriff "Lösungsmittel" ist ein Mittel gemeint, das in der Lage ist, eine Dispersion des Metalles im "Lösungsmittel" herzustellen, d.h. dieser Begriff soll auch bloße Dispersionsmittel umfassen. Ein "apolares oder unpolares" Lösungsmittel weist keine polare Gruppen oder funktionelle Gruppen auf, deren charakteristische Elektronenverteilungen dem Molekül ein beträchtliches elektrisches Dipolmoment erteilen, so daß solche Gruppen die Affinität zu anderen polaren chemischen Verbindungen bedingen.

Erfindungsgemäß wurde festgestellt, daß durch Einsatz eines apolaren Lösungsmittels im vorstehend angegebenen Reduktionsverfahren reines amorphes Silicium erhalten wird, das eine schwarze Farbe besitzt. Dieses amorphe Silicium ist nicht "oberflächenbelegt" und zeichnet sich durch ein besonders hohes Reaktionsvermögen aus. Dies steht im Gegensatz zu dem auf herkömmliche Weise gewonnenen amorphen Silicium, das als braunes Pulver anfällt und, wie Untersuchungen gezeigt haben, "oberflächenbelegt" ist, beispielsweise mit Cl, Silylchlorid oder O₂ oder HO belegt ist.

Bei den bisherigen Darstellungsverfahren hat man immer mit polaren Lösungsmitteln gearbeitet, die zwangsläufig zu einer Oberflächenbelegung des gewonnenen Siliciums geführt haben, das als "amorph" bezeichnet wurde, jedoch in Wirklichkeit aufgrund der vorhandenen Oberflächenbelegung kein reines amorphes Silicium ist. So wird auch bei dem Verfahren in der vorstehend genannten Veröffentlichung mit einem polaren Lösungsmittel (Glycolether) gearbeitet.

Vorzugsweise finden organische, nicht koordinierende Lösungsmittel, wie Xylol, Toluol, Verwendung.

Als Metall wird vorzugsweise ein Metall der Gruppe I oder II des Periodensystems verwendet. Natrium wird bevorzugt, wobei allerdings auch mit Magnesium gute Ergebnisse erzielt wurden.

Als Halosilan findet vorzugsweise ein Silan von Br, Cl, J oder F oder ein Organosilan von Br, Cl, J oder F Verwendung. Besonders bevorzugt wird als Halosilan ein Siliciumtetrahalogenid eingestetzt, wobei speziell Siliciumtetrachlorid (SiCl₄) oder Silicumtetrafluorid (SiF₄) Verwendung finden.

Das Metall wird vorzugsweise im Lösungsmittel aufgeschmolzen, um eine Dispersion des Metalles im Lösungsmittel herzustellen. Ein derartiges Aufschmelzen ist nicht unbedingt erforderlich, vielmehr können auch Metallstäube, Metallpulver etc. eingesetzt werden. Wesentlich ist, daß das Metall in einem Zustand mit aktivierter Oberfläche für die Reaktion zur Verfügung steht.

Wenn das Metall im Lösungsmittel aufgeschmolzen werden soll, findet vorzugsweise ein apolares Lösungsmittel Verwendung, dessen Siedepunkt höher ist als der Schmelzpunkt des verwendeten Metalles, und es wird mit einer Reaktionstemperatur über der Schmelztemperatur des Metalles (Natrium = 96 °C) und unter dem Siedepunkt des eingesetzten apolaren Lösungsmittels gearbeitet. Es kann auch bei erhöhten Drücken gearbeitet werden.

Zweckmäßigerweise wird das erfindungsgemäße Verfahren unter Rückflußbedingungen für das Lösungsmittel durchgeführt.

Bei dem erfindungsgemäßen Verfahren fällt das unbelegte amorphe Silicium im Gemisch mit einem Metallhalogenid an. Bereits dieses Gemisch besitzt in bezug auf das amorphe Silicum eine sehr hohe Reaktivität, so daß es für die gewünschten weiteren Reaktionen eingesetzt werden kann. Das amorphe Silicum kann aber auch über ein Trennverfahren aus dem Gemisch isoliert werden, wobei hierzu beliebige physikalische oder chemische Trennverfahren eingesetzt werden können. So können beispielsweise physikalische Trennverfahren, wie Auf schmelzen, Abpressen; zentrifugieren, Sedimentationsverfahren, Flotationsverfahren etc., eingesetzt werden. Als chemisches Verfahren kann ein Auswaschen des amorphen Siliciums mit einem Lösungsmittelgemisch, welches das Metallhalogenid löst, aber nicht irreversibel mit dem Silicium reagiert, durchgeführt werden. Beispielsweise wird mit flüssigem Ammoniak ein mit Ammoniak belegtes Silicium gewonnen, wobei durch Abpumpen des Ammoniaks das gewünschte reine amorphe Silicium schwarzer Farbe dargestellt werden kann.

Gemäß einer zweiten Variante des erfindungsgemäßen Verfahrens wird die eingangs genannte Aufgabe durch ein Verfahren zur Herstellung von amorphem Silicium gelöst, das die folgenden Schritte aufweist:
Gewinnung von Siliciumtetrachlorid (SiCl₄) durch
   a. Umsetzen von SiO₂ mit Chlor in Gegenwart eines Reduktionsmittels,
   ab. Umsetzen von Silicium mit Chlor oder Chlorverbindungen, oder
   ac. Gewinnen des SiCl₄ als Nebenprodukt der Müller-Rochow-Synthese oder der Herstellung von Chlorsilanen und
   b. Reduktion des Siliciumtetrachlorides (SiCl₄) mit einem Metall in einem Lösungsmittel.

Das erfindungsgemäße Verfahren zeichnet sich somit durch zwei Schritte aus, wobei im ersten Schritt Siliciumtetrachlorid hergestellt wird oder gewonnen wird. Im zweiten Schritt wird das Siliciumtetrachlorid mit einem Metall in einem Lösungsmittel reduziert, wodurch amorphes Silicium gewonnen wird.

Das erfindungsgemäße Verfahren zeichnet sich durch eine besonders hohe Vielseitigkeit aus. So kann es zum Herstellen v=n hochreinem amorphen (schwarzen) Silicium eingesetzt werden. Es kann jedoch ebenfalls zur Herstellung von braunem belegten amorphen Silicium, d.h. amorphem Silicium geringerer Reinheit, eingesetzt werden. Eine weitere Einsatzmöglichkeit des erfindungsgemäßen Verfahrens besteht darin, daß es zur Ånderung der Belegung des belegten amorphen Siliciums verwendet werden kann. Mit anderen Worten, aus belegtem amorphen Silicium, das beispielsweise mit 0 oberflächenbelegt ist, wird belegtes amorphes Silicium hergestellt, das beispielsweise mit Cl belegt ist. Noch eine andere Variante des erfindungsgemäßen Verfahrens zeichnet sich dadurch aus, daß es zur Umwandlung von kristallinem in amorphes Silicium eingesetzt wird. Schließlich findet das erfindungsgemäße Verfahren auch zur Aufreinigung von Silicium Verwendung. Auf die vorstehend beschriebenen Ausftlhrungsformen des erfindungsgemäßen Verfahrens wird später eingegangen werden.

In Schritt b. des erfindungsgemäßen Verfahrens wird das hergestellte Siliciumtetrachlorid mit einem Metall in einem Lösungsmittel reduziert. Mit dem hier verwendeten Begriff "Lösungsmittel" ist ein Mittel gemeint, das in der Lage ist, eine Dispersion des Metalles im "Lösungsmittel" herzustellen, d.h. dieser Begriff soll auch bloß Dispersionsmittel umfassen. Ein apolares oder unpolares "Lösungsmittel" weist im Gegensatz zu einem "polaren" Lösungsmittel keine polare Gruppen oder funktionelle Gruppen auf, deren charakteristische Elektronenverteilungen dem Molekül ein beträchtliches elektrisches Dipolmoment erteilen, so daß solche Gruppen die Affinität zu anderen polaren chemischer. Verbindungen bedingen.

Bei einer Ausführungsform des erfindungsgemäßen Verfahrens findet in Schritt b. ein polares Lösungsmittel Verwendung. Das hierdurch gewonnene amorphe Silicium fällt als braunes Pulver an und ist, wie Untersuchungen gezeigt haben, "oberflächenbelegt", beispielsweise mit Cl, Silylchlorid oder O₂ oder HO. Durch die Verwendung eines polaren Lösungsmittels wird zwangsläufig eine Oberflächenbelegung des gewonnenen amorphen Siliciums erreicht, das aufgrund der vorhandenen Oberflächenbelegung kein reines amorphes Silicium ist. Ein solches polares Lösungsmittel ist beispielsweise Glycolether.

Bei einer besonders bevorzugten Ausführungsform des erfindungsgemäßen Verfahrens wird im Schritt b. ein apolares Lösungsmittel verwendet. Erfindungsgemäß wurde festgestellt, daß durch Einsatz eines derartigen apolaren Lösungsmittels reines amorphes Silicium erhalten wird, das eine schwarze Farbe besitzt. Dieses amorphe Silicium ist nicht "oberflä - chenbelegt" und zeichnet sich durch ein besonders hohes Reaktionsvermögen aus. Vorzugsweise finden hierbei organische, nichtkoordinierende Lösungsmittel, wie Xylol, Toluol, Verwendung.

Als Metall wird in Schritt b. vorzugsweise ein Metall der Gruppe I oder II des Periodensystems verwendet. Natrium wird bevorzugt, wobei allerdings auch mit Magnesium gute Ergebnisse erzielt wurden.

Das Metall wird vorzugsweise im Lösungsmittel aufgeschmolzen, um eine Dispersion des Metalles im Lösungsmittel herzustellen. Ein derartiges Aufschmelzen ist nicht unbedingt erforderlich, vielmehr können auch Metallstäube, Matallpulver etc. eingesetzt werden. Wesentliche ist, daß das Metall in einem Zustand mit aktivierter Oberfläche für die Reaktion zur Verfügung steht.

Wenn das Metall im Lösungsmittel aufgeschmolzen werden soll, findet vorzugsweise ein apolares Lösungsmittel Verwendung, dessen Siedepunkt höher ist als der Schmelzpunkt des verwendeten Metalles, und es wird mit einer Reaktionstemperatur über der Schmelztemperatur des Metalles (Natrium = 96°C) und unter dem Siedepunkt des eingesetzten apolaren Lösungsmittels gearbeitet. Es kann auch bei erhöhten Drücken gearbeitet werden.

Zweckmäßigerweise wird Schritt b. unter Rückflußbedingungen für das Lösungsmittel durchgeführt.

Bei dem erfindungsgemäßen Verfahren fällt das unbelegte amorphe Silicium im Gemisch mit einem Metallchlorid an. Bereits dieses Gemisch besitzt in bezug auf das amorphe Silicium eine sehr hohe Reaktivität, so daß es für die gewünschten weiteren Reaktionen eingesetzt werden kann. Das amorphe Silicium kann aber auch über ein Trennverfahren aus dem Gemisch isoliert werden, wobei hierzu beliebige physikalische oder chemische Trennverfahren eingesetzt werden können. So können beispielsweise physikalische Trennverfahren, wie Aufschmelzen, Abpressen, Zentrifugieren, Sedimentationsverfahren, Flotationsverfahren etc., eingesetzt werden. Als chemisches Verfahren kann ein Auswaschen des amorphen Siliciums mit einem Lösungsmittel oder Lösungsmttelgemisch, welches das Metallchlorid löst, aber nicht irreversibel mit dem Slicium reagiert, durchgeführt werden. Beispielsweise wird mit flüssigem Ammoniak ein mit Ammoniak belegtes Silicium gewonnen, wobei durch Abpumpen des Ammoniaks das gewünschte reine amorphe Silicium schwarzer Farbe dargestellt werden kann.

Zur Gewinnung des Siliciumtetrachlorides sieht das erfindungsgemäße Verfahren verschiedene Alternativen vor. Bei einer ersten Alternative wird SiO₂ (Siliciumdioxid) mit Chlor (Cl₂) in Gegenwart eines Reduktionsmittels umgesetzt. Bei dem Reduktionsmittel kann es sich hierbei um Kohlenstoff handeln, wobei das Verfahren als Carbochlorierung bezeichnet wird. Ein entsprechendes Verfahren ist beispielsweise in der EP 0 167 156 A2 beschrieben. Als Reduktionsmittel können auch Metalle Verwendung finden. Bei einer Ausführungsform des erfindungsgemäßen Verfahrens wird hierbei Magnesium als Reduktionsmittel eingesetzt, wobei dieses sogenannte magnesothermische Verfahren nach der Reaktionsgleichung

SiO₂ + 2Mg → 2MgO + Si

abläuft. Mit diesem Verfahren wird kristallines Silicium erhalten. Wird MgO zugesetzt, erhält man amorphes belegtes Silicium.

Eine weitere Verfahrensvariante ist das sogenannte aluminothermische Verfahren, bei dem als Reduktionsmittel Aluminium Verwendung findet. Das Verfahren läuft wie folgt ab:

3SiO₂ + 4A1 - 3Si+Al₂O₃

Auch bei diesem Verfahren fällt kristallines Silicium an.

Das gebildete Si wird mit Chlor zum Siliciumtetrachlorid umgesetzt. Auf diese Weise kann das entstandene kristalline Silicium in amorphes Silicium (hochrein oder belegt) überführt werden, oder es kann eine Umbelegung von amorphem Silicium durchgeführt werden. Ferner kann eine Aufreinigung des gewonnenen Siliciums (amorph oder kristallin) vorgenommen werden, wenn entsprechend verunreinigtes SiO₂ als Ausgangsprodukt eingesetzt wird.

Bei einer weiteren Alternative von Schritt a. des erfindungsgemäßen Verfahrens wird Silicium mit Chlor oder ChlorVerbindungen umgesetzt. Es kann sich hierbei um Silicium handeln, das gereinigt, vom kristallinen in den amorphen Zustand überführt oder umbelegt werden soll.

Noch eine Variante sieht vor, daß das Siliciumtetrachlorid als Nebenprodukt der Müller-Rochow-Synthese oder der Herstellung von Chlorsilanen gewonnen wird. Im letztgenannten Fall fällt das Siliciumtetrachlorid beispielsweise als Nebenprodukt bei der Herstellung von Trichlorsilan und der Abscheidung des polykristallinen Si an.

Bei der direkten Umsetzung von Silicium mit Chlor oder Chlorverbindungen kann mit Mikrowellenenergie gearbeitet werden. Vorzugsweise findet Chlor oder Chlorwasserstoff Verwendung. Zweckmäßigerweise wird nicht-gepulste Mikrowellenenergie eingesetzt, wobei Silicium in Verbindung mit einer Mikrowellenenergie absorbierenden und thermische Energie auf Silicium übertragenden Substanz verwendet werden kann, um die Umsetzung zu beschleunigen.

Gemäß einer dritten Variante des erfindungsgemäßen Verfahrens wird die eingangs genannte Aufgabe durch ein Verfahren zur Herstellung von amorphem Silicium durch Umsetzen von SiO₂ oder Silicaten mit Fluorwasserstoff oder einem Fluorid eines Metalles der Gruppe I oder II des Periodensystems zu SiF₄ unter Freisetzung von H₂O oder von Hexafluorosilicaten unter Wärmezufuhr zu SiF₄ und Metallfluorid und Umsetzen des SiF₄ mit einem Metall der Gruppe I oder II zu Si und einem Metallfluorid gelöst. Auf diese Weise läßt sich braunes amorphes Silicium herstellen.

Das für die Herstellung von Si benötigte Basismaterial SiO₂ (Siliciumdioxid) kann aus auf der Erde vorhandenen SiO₂₋Quellen (insbesondere Wüstensand, Meersand) bereitgestellt werden. Dieser Sand, der weitgehend aus SiO₂ besteht, wird gemäß der ersten Alternative direkt mit Fluorwasserstoff (HF) (extern) umgesetzt, wobei SiF₄ (Siliciumtetrafluorid) durch Zusatz von Schwefelsäure zur entstehenden Hexafluorokieselsäure (H₂SiF₆) ausgetrieben wird. 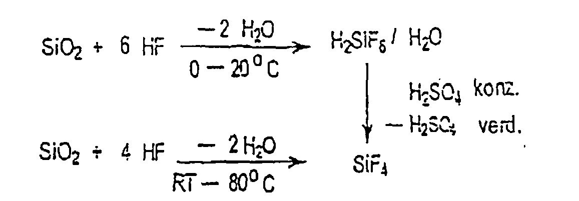 SiO₂ wird mit HF gemischt, und H₂SO₄ wird unter Rühren eingetropft. Je nach Zugabegeschwindigkeit entsteht zwischen 0°C und Raumtemperatur SiF₄. Durch eine Temperaturerhöhung auf ca. 80°C wird der SiF₄-Austrieb aus einem Vorratsgefäß vervollständigt. Das gewonnene SiF₄ fällt als farbloses Gas an, das durch Umkondensation oberhalb seines Sublimationspunktes (-95,5°C) weiter aufgereinigt werden kann. Alle die sich aus den Verunreinigungen des Sandes (SiO₂) ergebenden Alkali-, Erdalkali-, Al-Fluoride u.a. bleiben als feste Produkte der HF-Umsetzung zurück bzw. reagieren mit zugesetzter H₂SO₄ zu den Sulfaten und können als Feststoffe abgetrennt werden (können nach Aufarbeitung produktspezifischen Verwendungen zugeführt werden).

Bei der 2. Alternative wird Sand (SiO₂) mit einem Fluorid eines Metalls der Gruppe I oder II, vorzugsweise einem Alkalimetallfluorid (AF), insbesondere Natriumfluorid, gemischt, und es wird Schwefelsäure zugetropft (in situ-Verfahren). Dabei entsteht der HF in situ und reagiert mit dem SiO₂ sofort zum SiF₄ und Metallsulfat, vorzugsweise Alkalimetallsulfat, insbesondere Natriumsulfat, ab.

Was das zur Umsetzung des SiF₄ verwendete Metall betrifft, so kann dieses in fester oder flüssiger Form eingesetzt werden, oder es wird in der Gasphase gearbeitet. Eine weitere Alternative sieht vor, daß man in Lösung umsetzt.

Die Erfindung wird nachfolgend anhand von Ausführungsbeispielen im einzelnen beschrieben. Diese Beispiele betreffen die erste Variante des erfindungsgemäßen Verfahrens.

### Beispiel 1

### Herstellung von amorphem Silicium aus Siliciumtetrachlorid

30,20 g (1,31 mol) Na werden unter Schutzgas in 250 ml o-Xylol aufgeschmolzen und durch heftiges Rühren mit einem Magnetrührer fein dispergiert. 45 ml (62,1 g, 0,365 mol, 1,1 Äquivalente) SiCl₄ werden unter heftigem Rühren so zugetropft, daß die Siedetemperatur der Reaktionsmischung den Schmelzpunkt des Metalles nicht unterschreitet. Um ein vollständiges Abreagieren des Natriums zu gewährleisten, wird so lange weiter unter heftigem Rühren und Rückfluß gekocht, bis die Siedetemperatur der Reaktionsmischung nicht mehr steigt. Ergebnis der Reaktion ist ein schwarzes Gemisch aus amorphem Silicium und NaCl. Ein größerer Überschuß von SiCl₄ ist für die Reaktion nicht hinderlich, sofern die Siedetemperatur der Mischung oberhalb des Schmelzpunktes von Na bleibt.

### Beispiel 2

### Herstellung von amorphem Silicium aus Siliciumtetrafluorid

4,15 g (0,18 mol) Na werden in 50 ml o-Xylol unter SiF₄-Atmosphäre aufgeschmolzen und durch heftiges Rühren mit einem Magnetrührer fein dispergiert. Die Reaktionstemperatur liegt beständig über dem Schmelzpunkt des Natriums, jedoch unter dem Siedepunkt des Xylols (bevorzugt 110-120 °C). Ein Vorrat an SiF₄ befindet sich in einem an die Apparatur angeschlossenen Gasballon, mit Hilfe dessen auch der SiF₄₋Umsatz kontrolliert wird. Die Reaktion ist abgeschlossen, sobald kein SiF₄ mehr verbraucht wird. Produkt der Umsetzung ist ein schwarzes Gemisch aus amorphem Silicium und NaF.

Aus dem gemäß den obigen beiden Beispielen hergestellten Gemisch kann schwarzes amorphes Silicium über ein geeignetes Trennverfahren gewonnen werden. Das erhaltene schwarze amorphe Silicium besitzt eine höhere Reaktivität als auf herkömmliche Weise, d.h. mit einem polaren Lösungsmittel, gewonnenes Silicium.

Als Halosilan können ferner Hexafluorosilicate eingesetzt werden.

Die Reaktionstemperatur oberhalb des Metallschmelzpunktes gilt nicht für z.B. Na-Staub, welcher auch bei Raumtemperatur reagiert. Die Reaktionstemperatur unterhalb des Siedepunktes sollte nur für gasförmige Silane eingehalten werden, um einen ausreichenden Partialdruck des Silanes über der Dispersion zu gewährleisten und somit vertretbare Reaktionszeiten zu erreichen.

## Patentansprüche

1. Verfahren zur Herstellung von amorphem Silicium durch Reduktion von Halosilanen mit einem Metall, **dadurch gekennzeichnet, daß** die Reduktion in Gegenwart eines apolaren Lösungsmittels durchgeführt wird, es sei denn, es handelt sich bei einer Halogengruppe des Halosilanes um F, in welchem Fall die Gegenwart eines apolaren Lösungsmittels nicht erforderlich ist.

2. Verfahren nach Anspruch 1, **dadurch gekennzeichnet, daß** als Halosilan ein Silan von Br, Cl, J oder F oder ein Organosilan von Br, Cl, J oder F verwendet wird.

3. Verfahren nach Anspruch 1 oder 2, **dadurch gekennzeichnet, daß** die Halosilane aus Siliciumtetrahalogenid oder Hexafluorosilicat ausgewählt werden.

4. Verfahren nach Anspruch 3, **dadurch gekennzeichnet, daß** das Siliciumtetrahalogenid aus Siliciumtetrachlorid, erhalten durch
a.a. Umsetzen von SiO₂ mit Chlor in Gegenwart eines Reduktionsmittels,
a.b. Umsetzen von Silicium mit Chlor oder Chlorverbindungen oder
a.c. Gewinnen des SiCl₄ als Nebenprodukt der Müller-Rochow-Synthese oder der Herstellung von Chlorsilanen,
oder Siliciumtetrafluorid, erhalten durch Umsetzen von SiO₂ oder Silicaten mit Fluorwasserstoff oder einem Fluorid eines Metalles der Gruppe I oder II des Periodensystems zu SiF₄ unter Freisetzung von H₂O oder von Hexafluorosilicaten unter Wärmezufuhr zu SiF₄ und Metallfluorid und Umsetzen des SiF₄ mit einem Metall der Gruppe I oder II zu Si und einem Metallfluorid,
ausgewählt wird.

5. Verfahren nach Anspruch 4, **dadurch gekennzeichnet, daß** das zum Umsetzen des SiF₄ verwendete Metall in der Gasphase oder in Lösung umgesetzt wird.

6. Verfahren nach einem der vorangehenden Ansprüche, **dadurch gekennzeichnet, daß** als Metall ein Metall der Gruppe I oder II des Periodensystems verwendet wird.

7. Verfahren nach einem der vorangehenden Ansprüche, **dadurch gekennzeichnet, daß** das Metall im Lösungsmittel aufgeschmolzen wird.

8. Verfahren nach einem der vorangehenden Ansprüche, **dadurch gekennzeichnet, daß** als Metall Natrium verwendet wird.

9. Verfahren nach einem der vorangehenden Ansprüche, **dadurch gekennzeichnet, daß** das Metall in einem Zustand mit aktivierter Oberfläche verwendet wird.

10. Verfahren nach einem der vorangehenden Ansprüche, **dadurch gekennzeichnet, daß** das Metall als Pulver, Staub oder Dispersion, insbesondere bei Raumtemperatur, eingesetzt wird.

11. Verfahren nach einem der vorangehenden Ansprüche, **dadurch gekennzeichnet, daß** ein apolares Lösungsmittel verwendet wird, dessen Siedepunkt höher ist als der Schmelzpunkt des verwendeten Metalles (bei Normaldruck).

12. Verfahren nach einem der vorangehenden Ansprüche, **dadurch gekennzeichnet, daß** es unter Rückflußbedingungen für das Lösungsmittel durchgeführt wird.

13. Verfahren nach einem der vorangehenden Ansprüche, **dadurch gekennzeichnet, daß** das im Gemisch mit einem Metallhalogenid anfallende unbelegte amorphe Silicium über ein Trennverfahren isoliert wird.

14. Verfahren nach einem der vorangehenden Ansprüche, **dadurch gekennzeichnet, daß** es zum Herstellen von hochreinem amorphen Silicium eingesetzt wird.

15. Verfahren nach einem der vorangehnden Ansprüche, **dadurch gekennzeichnet, daß** es zum Herstellen von belegtem amorphen Silicium eingesetzt wird.

16. Verfahren nach einem der vorangehenden Ansprüche, **dadurch gekennzeichnet, daß** es zur Änderung der Belegung des belegten amorphen Siliciums verwendet wird.

17. Verfahren nach einem der vorangehenden Ansprüche, **dadurch gekennzeichnet, daß** es zur Umwandlung von kristallinem in amorphes Silicium eingesetzt wird.

18. Verfahren nach einem der vorangehenden Ansprüche, **dadurch gekennzeichnet, daß** es zur Aufreinigung von Silicium verwendet wird.
